# EUROPÄISCHE PATENTSCHRIFT

(11) **EP 1 239 145 B1**
(45) Veröffentlichungstag und Bekanntmachung des Hinweises auf die Patenterteilung: **30.05.2007**
(21) Anmeldenummer: 02005006.8
(22) Anmeldetag: 06.03.2002
(51) Int. Cl.: F02M 37/22

(54) **Flüssigkeitsfilter mit eingebautem Druckregler**
Filter for fluids with a built-in pressure regulator
Filtre pour fluide presentant un régulateur de pression intégré

(30) Priorität: 10.03.2001 DE 10111545
(43) Veröffentlichungstag der Anmeldung: 11.09.2002
(73) Patentinhaber: ROBERT BOSCH GMBH, 70442 Stuttgart (DE)
(72) Erfinder: Schreckenberger, Dieter, 71672 Marbach (DE); Wheeler, Tony, Anderson, SC 29621 (DE); Kaehler, Juergen, 28663 Cobena (ES); Sanchez, Luis Lozoano, 28022 Madrid (ES)

(56) Entgegenhaltungen:
- EP-A- 0 779 948
- EP-A- 0 795 079
- EP-A- 0 835 375
- DE-A- 3 233 268
- US-A- 4 072 167
- US-A- 4 387 715

## Beschreibung

### Stand der Technik

Die Erfindung geht aus von einem Flüssigkeitsfilter mit eingebautem Druckregler für Kraftstoff nach der im Oberbegriff des Anspruchs 1 näher angegebenen Gattung.

Es ist schon ein solches Flüssigkeitsfilter mit eingebautem Druckregler für Kraftstoff aus der EP 0 835 375 B1 bekannt, bei der die sonst separaten Bauteile wie Filter und Druckregler in einer gemeinsamen Einheit zusammengefaßt sind. Bei diesem Flüssigkeitsfilter arbeitet der Druckregler mit einer Membran, welche von dem zu regelnden Druck am Ablaufanschluß gegen die Kraft einer Feder beaufschlagt ist. Der Druckregler liegt hier auf der Reinseite des Flüssigkeitsfilters, so daß seine Ventilfunktion nicht von Schmutzteilchen beeinträchtigt wird. Es kann nun in manchen Fällen von Nachteil sein, daß der Druckregler hier im Gehäuse-Deckel liegt und mit einer Membran arbeitet. Die im Durchmesser relativ große Membran führt zu einer entsprechend großen und aufwendigen Bauweise des Druckreglers, wobei auch das dichte Einspannen der Membran im Gehäuse-Deckel eine relativ kostspielige Montage erfordert. Zudem ist die Membran hier zentral von einer Schraubenfeder belastet, die in einem glockenförmigen Raum des Deckels untergebracht ist, wobei dieser Federraum zur Atmosphäre über einen zusätzlichen Anschluss entlüftet ist, wodurch der Aufwand für den Druckregler ebenfalls erhöht wird. Ferner wird der über den Druckregler abströmende Kraftstoff über ein Rohr geleitet, das das Filterelement zentral durchdringt und zu einem am Gehäuse liegenden Tankanschluss führt, wobei dieser Tankanschluss entgegengesetzt zum Druckregler am Gehäuse liegt.

Ferner ist aus der US-PS 4,011,848 ein Flüssigkeitsfilter mit eingebautem Druckregler bekannt, bei dem das Filter im wesentlichen als Leitungsfilter ausgebildet ist, an dessen entgegengesetzt liegenden Stirnseiten des Gehäuses der Zulaufanschluss und der Ablaufanschluss angeordnet sind. Vom Gehäuse geht radial seitlich ein dritter Anschluss zum Tank ab, in dem als Druckregelventil ein einfaches, federbelastetes Kugelventil vorgesehen ist. Obwohl hier der Druckregler bereits mit einem einfachen Kugelventil arbeitet, ist es von Nachteil, dass hier der Druckregler unmittelbar an die Schmutzseite angeschlossen und damit schmutzanfällig ist. Ferner neigt ein derartiger Druckregler mit seiner relativ aufwendigen Schraubenfeder und durch seine externe Bauweise zu Schwingungen und damit zu unerwünschter Geräuschbildung. Der Druckregler liegt hier in ungünstiger Weise außerhalb des eigentlichen Flüssigkeitsfilters, dessen zueinander senkrechte Lage der Stutzen für den Ablaufanschluss und den Tankanschluss in vielen Einbaufällen sehr ungünstig ist.

Die DE 32 33 268 A 1 zeigt ein Hydraulikventil mit einem Einwegventil mit einer Dichtkugel. Eine ausgestanzte Federzunge dient als Federelement für die Dichtkugel des Einwegventils.

In der WO 97/12 143 wird ein Flüssigkeitsfilter mit eingebautem Druckregler für Kraftstoff vorgeschlagen, bei dem an einem stirnseitigen Bauelement mit mindestens einem Anschluss am Gehäuse an dessen Innerseite der Druckregler mit seiner Membran angebaut ist. Die scheibenförmige Membran hat eine einzige Einspannstelle an ihrem Außenumfang und ein zentrisch angeordnetes, bewegliches Schließglied. Die Membran wird vom Druck in einem mit der Reinseite verbundenen Druckraum gegen die Kraft einer Feder in einem gasgefüllten Federraum beaufschlagt. Bei dieser Ausführung ist der Druckregler gegen Rückstaudruck im Tankanschluss unempfindlich.

### Vorteile der Erfindung

Das erfindungsgemäße Flüssigkeitsfilter mit dem eingebauten Druckregler für Kraftstoff mit den kennzeichnenden Merkmalen des Anspruchs 1 hat demgegenüber den Vorteil, dass bei dieser Ausbildung und Anordnung des Druckreglers unmittelbar im Filterelement des Flüssigkeitsfilters eine äußerst einfache, kompakte und kostengünstige Bauweise möglich wird, bei der zudem die Gefahr von Schwingungen und damit Geräuschbildung durch Druckpulsationen verringert wird, wobei ferner auch eine ausreichend genaue Arbeitsweise des Druckreglers erzielbar ist. Der Druckregler läßt sich dabei in besonders günstiger Weise im Filterelement integrieren, wobei er zusammen mit dem Filterelement handhabbar und montierbar ist. Bisherige Filtergehäuse können dabei unverändert weiter verwendet werden. Das Flüssigkeitsfilter eignet sich durch seine kostengünstige Bauweise besonders als Wegwerffilter.

Durch die in den Unteransprüchen aufgeführten Maßnahmen sind vorteilhafte Weiterbildungen und Verbesserungen des in Anspruch 1 angegebenen Flüssigkeitsfilters mit eingebautem Druckregler möglich. Ein besonders zweckmäßig und einfach bauendes Filterelement ergibt sich gemäß Anspruch 2, bei dem der Druckregler leicht integrierbar ist. Zudem ermöglicht diese Bauweise eine einfache Abdichtung zwischen der Schmutzseite im Innern des Gehäuses und dem Tankanschluß. Der Druckregler selbst ist dabei gut zugänglich und leicht montierbar. Vorteilhaft ist eine Ausführung nach Anspruch 3, wodurch eine kostengünstige Bauweise möglich wird, bei welcher der Druckregler leicht handhabbar und prüfbar ist. Zweckmäßig ist eine Ausbildung nach Anspruch 4, wodurch die Federkraft im Druckregler leicht beherrschbar und einstellbar ist; die Blattfeder erzeugt keine störenden Einwirkungen auf andere Bauteile, insbesondere bleiben Filterelement oder Gehäuseteile ohne Krafteinwirkung. Günstig ist es ferner, das Flüssigkeitsfilter gemäß Anspruch 5 und 6 auszuführen, wodurch sich bei einfacher Bauweise auch eine geräuscharme Arbeitsweise erzielen läßt. Vorteilhaft ist es ferner, wenn bei einem Flüssigkeitsfilter das Filterelement gemäß Anspruch 7 ausgeführt wird; damit läßt sich eine kostengünstige Montage des Filterelements im Gehäuse erreichen, indem die Funktionen von Halterung und Abdichtung vereinigt werden. Zweckmäßig ist ferner eine Ausbildung des Flüssigkeitsfilters nach den Ansprüchen 11 und 12, wodurch sich eine kostengünstige Bauweise als Leitungsfilter ergibt, bei dem der Zulaufanschluß und der Ablaufanschluß auf der gleichen Gehäuse-Stirnseite liegen. Gemäß den Ansprüchen 13 und 14 läßt sich ein einfach und kompakt bauendes Tankeinbaufilter erreichen. Vorteilhafte Bauweisen ergeben sich ferner nach den Ansprüchen 15 bis 19, da bei diesen Leitungsfiltern der Zulaufanschluß und der Ablaufanschluß an entgegengesetzten Stirnseiten des Gehäuses liegen kann. Die Bauweise mit einem Zwischendeckel führt zu einer besonders einfachen, kostengünstigen und montagefreundlichen Lösung. Weitere vorteilhafte Ausgestaltungen ergeben sich aus den übrigen Unteransprüchen sowie aus der Beschreibung und der Zeichnung.

### Zeichnung

Drei Ausführungsbeispiele der Erfindung sind in der Zeichnung dargestellt und in der nachfolgenden Beschreibung näher erläutert. Es zeigen die Figur 1 einen Längsschnitt durch ein erstes Ausführungsbeispiel eines Flüssigkeitsfilters mit eingebautem Druckregler für Kraftstoff in einer Bauart als Leitungsfilter in vereinfachter Darstellung, Figur 2 einen Längsschnitt durch ein zweites Ausführungsbeispiel eines Flüssigkeitsfilters mit eingebautem Druckregler für Kraftstoff in einer Bauart als Tankeinbaufilter und Figur 3 einen Längsschnitt durch ein drittes Flüssigkeitsfilter in Leitungsfilterbauart mit entgegengesetzt am Gehäuse liegenden Zulauf- und Ablaufanschlüssen.

### Beschreibung der Ausführungsbeispiele

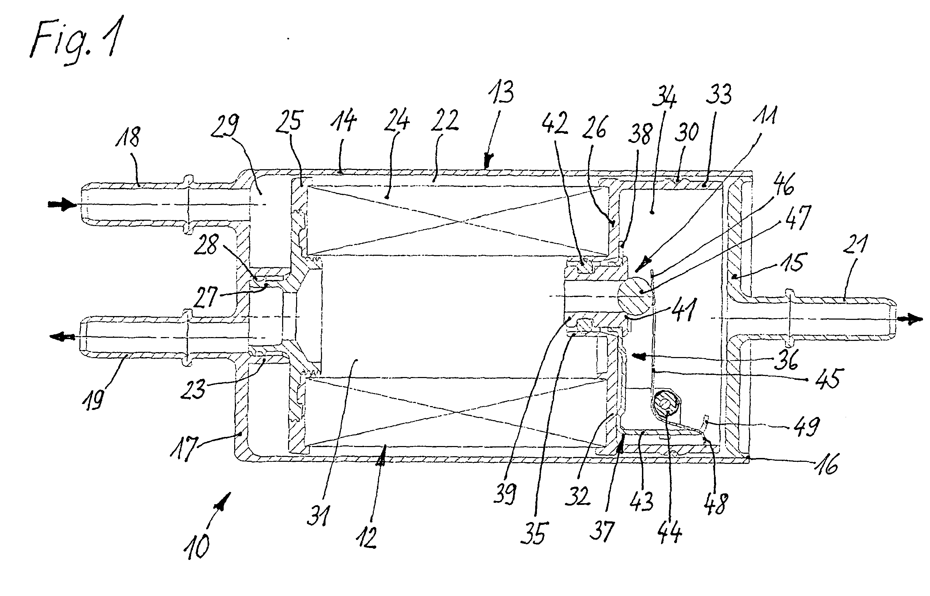

Die Figur 1 zeigt ein Flüssigkeitsfilter 10 mit eingebautem Druckregler 11 für Kraftstoffe in einem Längsschnitt in vereinfachter Darstellung, wobei das Flüssigkeitsfilter 10 als Leitungsfilter ausgeführt ist und der Druckregler 11 in einem Filterelement 12 des Flüssigkeitsfilters 10 integriert ist.

Das Flüssigkeitsfilter 10 weist ein Gehäuse 13 aus Aluminium-Druckgußteilen auf, das im wesentlichen aus einem becherförmigen Gehäuseteil 14 und einem zugehörigen Deckel 15 besteht. Die beiden Gehäuseteile 14, 15 sind an ihrem äußeren Rand 16 miteinander dicht und fest verbunden, insbesondere verschweißt. An einem Boden 17 des becherförmigen Gehäuseteils 14 ist ein Zulaufanschluß 18 ausgebildet, über den vom Tank kommender, ungereinigter Kraftstoff dem Flüssigkeitsfilter 10 zugeführt wird. Der Zulaufanschluß 18 liegt radial zur Längsachse des Flüssigkeitsfilters 10 nach außen versetzt und nahe am äußeren Rand des becherförmigen Gehäuseteils 14. Ferner ist am Boden 17 ein Ablaufanschluß 19 vorgesehen, über den gereinigter Kraftstoff das Flüssigkeitsfilter 10 verläßt und in Richtung Einspritzventile geführt wird. Weiterhin ist am Deckel 15 ein Tankanschluß 21 ausgebildet, über den beim Ansprechen des Druckreglers 11 Kraftstoff zum Tank abfließen kann. Der Tankanschluß 21 und der Ablaufanschluß 19 liegen im wesentlichen koaxial zueinander und in der Längsachse des Flüssigkeitsfilters 10, wobei der Ablaufanschluß 19 zur Längsachse etwas radial versetzt ist, um den Abstand zum Zulaufanschluß 18 zu vergrößern. Alle Anschlüsse 18, 19, 21 sind als Rohrstutzen für Schlauchanschluß ausgebildet und liegen achsparallel zueinander. Vom Boden 17 ragt in einen Innenraum 22 des Gehäuses 13 ein zentral angeordneter, rohrförmiger Aufnahmestutzen 23, der mit dem Ablaufanschluß 19 Verbindung hat.

Im Innenraum 22 des Gehäuses 13 ist zwischen den Zulaufanschluß 18 und den Ablaufanschluß 19 das Filterelement 12 geschaltet, das als Filtermaterial einen radial von außen nach innen durchströmten Sterneinsatz 24 aufweist, der in an sich bekannter Weise zwischen stirnseitigen Endkappen 25, 26 dicht angeordnet ist. Die beiden Endkappen 25, 26 bestehen aus Kunststoff, vorzugsweise Polyamid. Die dem Zulaufanschluß 18 zugewandte, im becherförmigen Gehäuseteil 14 innen liegende erste Endkappe 25 weist im wesentlichen eine tellerförmige Form auf und hat einen zentralen, nach außen ragenden Rohrstutzen 27, mit dem das Filterelement 12 in den Aufnahmestutzen 23 am Gehäuseteil 14 gesteckt ist. Der Rohrstutzen 27 weist dabei an seinem Außenumfang ein tannenbaumförmiges Dichtprofil 28 auf, so daß der Rohrstutzen 27 zugleich die Funktionen der Halterung des Filterelements 12 im Gehäuse 13 sowie die Abdichtung zwischen einer mit dem Zulaufanschluß verbundenen Schmutzseite 29 und einer mit dem Ablaufanschluß verbundenen Reinseite 31 übernimmt.

Die andere, zweite Endkappe 26 des Filterelements 12, die dem Deckel 15 zugewandt ist, nimmt den Druckregler 11 auf, der auf diese Weise unmittelbar im Filterelement 12 integriert ist. Zu diesem Zweck ist die zweite Endkappe 26 so ausgebildet, daß an ihrem Tellerteil 32 am Außendurchmesser durch eine ringförmig verlaufende Wand ein zylindrischer Abschnitt 33 angeformt ist, der einen Raum 34 umschließt, welcher im wesentlichen den Druckregler 11 aufnimmt. Mit diesem zylindrischen Abschnitt 33 ist das Filterelement 12 im Gehäuse 13 radial geführt und axial festgelegt. Ein am Außenumfang des zylindrischen Abschnitts 33 angeordneter Dichtring 30 übernimmt die Abdichtung zwischen der Schmutzseite 29 und dem Tankanschluß 21. Das Tellerteil 32 hat ferner einen zentralen, in den Sterneinsatz 24 hineinragenden Rohrstutzen 35, der etwas außermittig zur Längsachse des Flüssigkeitsfilters 10 angeordnet ist, um die Anordnung und Ausbildung des Druckreglers 11 zu begünstigen.

Der Druckregler 35 selbst ist als ein Ventilmodul 36 ausgeführt, der als Ganzes in die zweite Endkappe 26 einbaubar ist. Dieser Ventilmodul 36 weist ein abgewinkeltes Trägerelement 37 auf, das in einer Bodenplatte 38 eine Buchse 39 aufnimmt, welche einen Ventilsitz 41 bildet. Die Bodenplatte 38 liegt am Tellerteil 32 flach an, wobei die Buchse 39 in den Rohrstutzen 35 ragt und darin durch einen O-Ring 42 abgedichtet ist, wodurch die Reinseite 31 vom Tankanschluß 21 getrennt ist. Das Trägerelement 37 weist ferner einen rechtwinklig zur Bodenplatte 38 verlaufenden Haltearm 43 auf, der innerhalb des Raumes 34 nahe der ringförmigen Wand 33 verläuft und sich in Richtung zum Deckel 15 hin erstreckt. Am Haltearm 43 ist ein Widerlager 44 befestigt, an dem sich eine abgewinkelte Blattfeder 45 abstützt. Die Blattfeder 45 drückt mit ihrem langen, radial zur Längsachse des Filters 10 verlaufenden, federnden, ersten Arm 46 auf einen Sitzventilkörper 47, der hier als Kugel ausgeführt ist und drückt diesen Sitzventilkörper 47 gegen den Ventilsitz 41. Das auskragende Ende 49 des Haltearms 43 wird so gebogen, daß die Einpreßkraft über dem kurzen, zweiten Arm der Blattfeder 45 einen bestimmten Öffnungsdruck des Druckreglers 11 ergibt. Mit ihrem kurzen, abgewinkelten zweiten Arm 48 stützt sich die Blattfeder 45 im Haltearm 43 gehäusefest ab. Durch eine relativ kleine Bohrung im ersten Arm 46 läßt sich die Kugel 47 an der Blattfeder 45 besser in ihrer Lage halten. Der Abstand zwischen dem zentral liegenden Sitzventilkörper 47 und dem radial nach außen verlagerten Widerlager 44 wird dabei so groß gewählt, daß sich ein gewünschtes Arbeitsverhalten des Druckreglers 11 erreichen läßt. Die relativ schmal bauende Blattfeder 45 ist ebenso wie der gesamte Druckregler 11 im Raum 34 gut zugänglich, leicht montierbar und geschützt gegen störende Beeinflussungen untergebracht. Die Bauweise des Druckreglers 11 als Ventilmodul 36 mit Trägerelement 37 und vor allem mit Blattfeder 45, anstelle einer Schraubenfeder, erlaubt eine äußerst kostengünstige Bauweise, wie sie besonders bei Wegwerffiltern erwünscht ist.

Die Wirkungsweise des Flüssigkeitsfilters 10 mit integriertem Druckregler 11 wird wie folgt erläutert: Der in der Regel von einem Tank kommende Kraftstoff wird dem Flüssigkeitsfilter 10 über den Zulaufanschluß 18 zugeführt und gelangt im Inneren des Gehäuses 13 auf dessen Schmutzseite 29. Der Kraftstoff durchströmt radial von außen nach innen das Filterelement 12 und gelangt gereinigt auf die Reinseite 31, von wo er zumindest teilweise über den Ablaufanschluß 19 in Richtung der Verbraucher abströmt, die in vorliegendem Fall Einspritzventile sind. Der auf der Reinseite 31 herrschende Druck wirkt über die Buchse 39 auf den kugeligen Sitzventilkörper 47, der in Gegenrichtung von der Blattfeder 45 belastet wird. Mit Hilfe der Blattfeder 45 und dem freien Ende 49 des Haltearmes 43 wird dabei ein bestimmter Druck voreingestellt. Wird dieser voreingestellte Druck im Druckregler 11 überschritten, so hebt die Kugel 47 gegen die Kraft der Blattfeder 45 vom Ventilsitz 41 ab und Kraftstoff kann von der Reinseite 31 über den Raum 34 zum Tankanschluß 21 abströmen. Da der Druckregler 11 nur von der Reinseite 31 her mit Druckmittel beaufschlagt wird, werden alle seine Bauteile nur von gereinigtem Kraftstoff durchflossen und somit Verschleiß, Undichtigkeiten oder Funktionsstörungen aufgrund von Schmutzpartikeln ausgeschlossen. Der Druckregler 11 sorgt dabei durch die Ausbildung des Sitzventilkörpers als Kugel 47 für eine schwingungsarme und damit geräuscharme Arbeitsweise.

Das Filterelement 12 bildet mit dem in die Endkappe 26 integrierten Druckregler 11 eine vormontierbare Montagegruppe, die leicht handhabbar und montierbar ist und bei der auch der Druckregler 11 relativ leicht einstellbar ist. Die aufgezeigte Integration des Druckreglers 11 in Sitzventilausführung im Filterelement 12 ermöglicht bei einfacher Bauart eine genaue Druckregelung und einen geräuscharmen Betrieb, wobei der relativ klein bauende Druckregler eine kompakte Bauweise des Flüssigkeitsfilters 10 unterstützt.

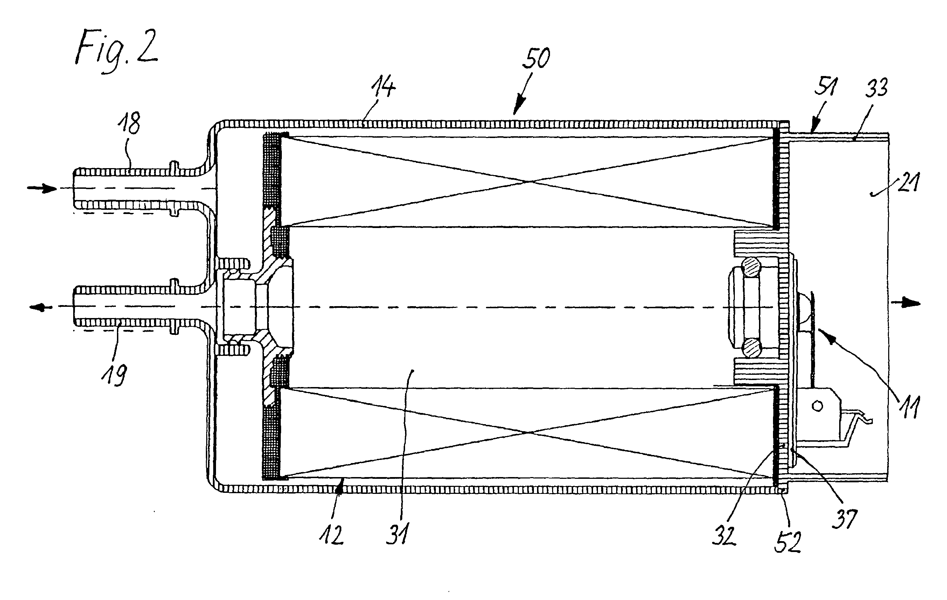

Die Figur 2 zeigt einen Längsschnitt durch ein zweites Flüssigkeitsfilter 50, das sich vom ersten Flüssigkeitsfilter 10 nach Figur 1 vor allem dadurch unterscheidet, daß es als Tankeinbaufilter ausgeführt ist. Im übrigen sind gleiche Bauelemente wie in Figur 1 mit gleichen Bezugszeichen versehen.

Das zweite Flüssigkeitsfilter 50 unterscheidet sich von dem ersten Filter 10 vor allem durch eine andere zweite Endkappe 51, die nun das becherförmige Gehäuseteil 14 an seinem offenen Ende abschließt, so daß ein gesonderter Deckel entfällt. Zu diesem Zweck ist das Tellerteil 32 der zweiten Endkappe 51 über den zylindrischen Abschnitt 33 hinaus im Durchmesser vergrößert und an seinem Rand 52 dicht und fest mit dem becherförmigen Gehäuseteil 14 verbunden. Das Gehäuseteil 14 ist hier ebenfalls aus Kunststoff ausgeführt wie die zweite Endkappe 51. Da ein gesonderter Deckel entfällt und dessen Funktion von der zweiten Endkappe 51 übernommen wird, bildet der zylindrische Abschnitt 33 zugleich auch den Tankanschluß 21, über den von der Reinseite 31 über den Druckregler 11 abströmender Kraftstoff unmittelbar in den Tank abströmt. Bei dem zweiten Flüssigkeitsfilter 50 ist der Ablaufanschluß 19 sowie das eigentliche Ventil des Druckreglers 11 koaxial auf der Längsachse des Flüssigkeitsfilters 50 angeordnet. Die Wirkungsweise des zweiten Flüssigkeitsfilters 50 entspricht sinngemäß derjenigen des ersten Flüssigkeitsfilters 10.

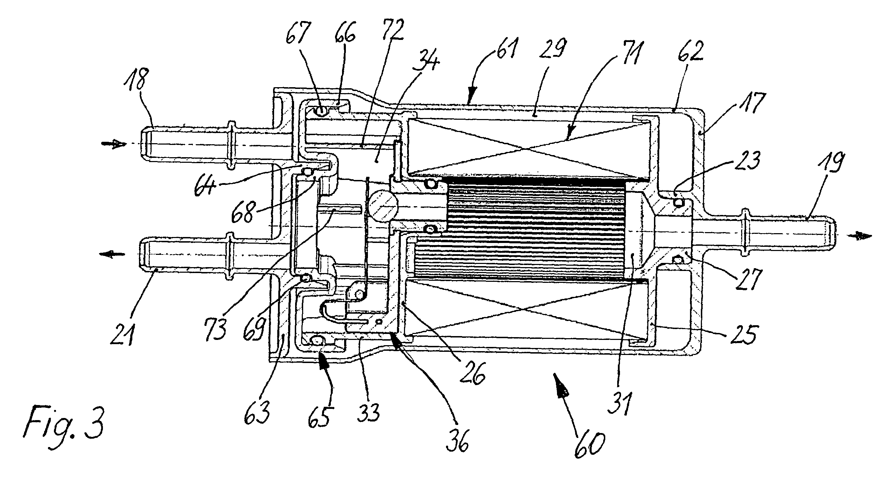

Die Figur 3 zeigt einen Längsschnitt durch ein drittes Flüssigkeitsfilter 50, das sich vom ersten Filter 10 nach Figur 1 vor allem dadurch unterscheidet, daß es als Leitungsfilter ausgebildet ist, bei dem der Zulaufanschluß 18 und der Ablaufanschluß 19 auf entgegengesetzten Stirnseiten am Gehäuse liegen; im übrigen sind gleiche Bauelemente wie in Figur 1 mit gleichen Bezugszeichen versehen.

Das dritte Flüssigkeitsfilter 60 weist ein anderes Gehäuse 61 auf, bei dem am Boden 17 des becherförmigen Gehäuseteils 62 zentral der Rohrstutzen für den Ablaufanschluß 19 angeordnet ist. Der das Gehäuseteil 62 verschließende Deckel 63 weist nun den radial nach außen versetzt liegenden Tankanschluß 21 auf. An der Innenseite des Deckels 63 ist dem Tankanschluß 21 ein konzentrisch zur Längsachse des Filters 60 liegender rohrförmiger Haltestutzen 64 zugeordnet.

Der den Ventilmodul 36 aufnehmende Raum 34 ist durch einen ringförmigen Zwischendeckel 65 abgedeckt, der einen S-förmigen Querschnitt aufweist; er umgreift mit seinem äußeren ringförmigen Kragen 66 den zylindrischen Abschnitt 33, wobei ein Dichtring 67 für die notwendige Abdichtung zwischen Schmutzseite 29 und Raum 34 sorgt; anstelle des Dichtrings kann die Abdichtung auch dadurch gemacht werden, daß der ringförmige Zwischendeckel 65 und die Endkappe 26 miteinander fest verbunden werden, insbesondere verschweißt oder verklebt werden.

Der Zwischendeckel 65 weist einen konzentrisch zum Kragen 66 liegenden ringförmigen, zentralen Hauptstutzen 68 auf, der in den Haltestutzen 64 des Deckels 63 gesteckt ist, dabei übernimmt ein O-Ring 69 die Abdichtung. Auf diese Weise ist das Filterelement 71 mit Hilfe des Zwischendeckels 65 im Gehäuse 61 geführt, gehalten und so abgedichtet, daß Schmutzseite 29, Reinseite 31 und Raum 34 dicht voneinander getrennt sind. Am Zwischendeckel 65 sind ferner zwei in den Raum 34 ragende Fixierstege 72, 73 angeordnet, von denen der erste Fixiersteg 72 die Lage des Ventilmoduls 36 im Raum 34 beziehungsweise in der zweiten Endkappe 26 sichert, während der zweite Fixiersteg 73 den Ventilhub begrenzt. Der Zwischendeckel 65 läßt sich leicht und kostengünstig aus Kunststoff herstellen und erlaubt eine einfache und kompakte Bauweise des Flüssigkeitsfilters 60 bei einfacher Montage.

Die Wirkungsweise des dritten Flüssigkeitsfilters 60 entspricht sinngemäß derjenigen des ersten Filters 10 nach Figur 1, wobei jedoch der Zulauf 18 und der Ablauf 19 an entgegengesetzten Stirnseiten des Gehäuses 61 erfolgen.

Selbstverständlich sind an den gezeigten Flüssigkeitsfiltern Änderungen möglich, ohne vom Gedanken der Erfindung abzuweichen. So kann bei Bedarf anstelle der abgewinkelt ausgebildeten Blattfeder auch eine ebene Blattfeder verwendet werden, die einseitig fest eingespannt ist. Auch kann die Form des zylindrischen Abschnitts 33 variiert und an die Anforderungen des Druckreglers 11 angepaßt werden, ohne vom Gedanken der Erfindung abzuweichen. Die Ausbildung des Filterelements mit integriertem Druckregler in der zweiten Endkappe und der Steckverbindung an der ersten Endkappe stellt eine besonders vorteilhafte Ausführungsform dar. Anstelle des gezeigten Sterneinsatzes können auch andere Filtermedien verwendet werden, die ringförmig zwischen zwei Endkappen angeordnet sind. Eine besonders vorteilhafte Kombination stellt auch der dritte Filter 60 nach Figur 3 dar, bei dem durch die Verwendung eines Zwischendeckels die Anschlüsse für Zulauf und Ablauf an entgegengesetzten Stirnseiten des Gehäuses liegen können. Der Einsatz eines Ventilmoduls im Filterelement ermöglicht in vorteilhafter Weise unterschiedliche Bauarten von Flüssigkeitsfiltern mit integriertem Druckregler.

## Patentansprüche

1. Flüssigkeitsfilter mit eingebautem Druckregler (11) für Kraftstoff und mit einem Gehäuse, in dem ein radial durchströmtes Filterelement (12) angeordnet ist, das zwischen einen mit einer Schmutzseite verbundenen Zulaufanschluss (18) und einen mit der Reinseite des Filters (10) verbundenen Ablaufanschluss (19) geschaltet ist, wobei an dem Gehäuse neben dem Zulauf- (18) und Ablaufanschluss (19) ein Tankanschluss (21) ausgebildet ist, über welchen beim Ansprechen des Druckreglers (11) über dessen Ventil strömende Flüssigkeit von der Reinseite zum Tank abströmt, und bei welchem Filterelement (12) das ringförmig angeordnete Filtermaterial zwischen zwei stirnseitig angeordneten Endkappen (25, 26, 51) abgedichtet angeordnet ist, **dadurch gekennzeichnet, dass** der Druckregler (11) an einer Endkappe (26, 51) des Filterelements (12) angeordnet ist und dass der Druckregler (11) einen Sitzventilkörper (47) aufweist, der von einer Blattfeder (45) belastet ist.

2. Flüssigkeitsfilter nach Anspruch 1, **dadurch gekennzeichnet, daß** die den Druckregler (11) aufnehmende Endkappe (26, 51) auf ihrer vom Filtermaterial (24) abgewandten Seite eine ringförmige Wand (33) aufweist und daß der von der Wand umschlossene Raum (34) im wesentlichen den Druckregler (11) aufnimmt.

3. Flüssigkeitsfilter nach Anspruch 1 oder 2, **dadurch gekennzeichnet, daß** der Druckregler (11) als ein in die Endkappe (26, 51) einbaubarer Ventilmodul (36) ausgeführt ist.

4. Flüssigkeitsfilter nach Anspruch 3, **dadurch gekennzeichnet, daß** der Druckregler (11) ein Trägerelement (37) aufweist, in dem eine den Ventilsitz (41) bildende Buchse (39) angeordnet ist und das einen im Abstand vom Ventilsitz (41) liegenden Haltearm (43) bildet, und daß am Trägerelement (37) eine abgewinkelte Blattfeder (45) so gelagert ist, daß sie mit ihrem einen Arm (46) den Sitzventilkörper (47) in Richtung des Ventilsitzes (41) drückt und sich mit dem anderen Arm (48) im Trägerelement (37) abstützt.

5. Flüssigkeitsfilter nach einem der Ansprüche 1 bis 4, **dadurch gekennzeichnet, daß** der Sitzventilkörper (47) kugelförmig ausgebildet ist und insbesondere eine Kugel ist.

6. Flüssigkeitsfilter nach Anspruch 4 oder 5, **dadurch gekennzeichnet, daß** die Endkappe (26, 51) einen der Reinseite (31) zugewandten Rohrstutzen (35) aufweist, in den eine Buchse (39) des Druckreglers (11) einsteckbar und durch einen Dichtring (42) abgedichtet ist.

7. Flüssigkeitsfilter nach einem oder mehreren der Ansprüche 1 bis 6, **dadurch gekennzeichnet, daß** das Filterelement (12, 71) an seiner anderen Endkappe (25), die entgegengesetzt zum Druckregler (11) liegt, einen nach außen ragenden, ringförmigen Rohrstutzen (27) zum Einstecken in einen gehäusefesten Aufnahmestutzen (23) aufweist, wobei der Rohrstutzen (27) zur Halterung und Abdichtung des Filterelements (12, 71) im Gehäuse (13) dient.

8. Flüssigkeitsfilter nach einem der Ansprüche 3 bis 7, **dadurch gekennzeichnet, daß** der Ventilmodul (36) des Druckreglers (11) durch den Raum (34) hindurch in der Endkappe (25, 51) austauschbar angeordnet ist.

9. Flüssigkeitsfilter nach einem der Ansprüche 1 bis 8, **dadurch gekennzeichnet, daß** die Blattfeder (45) zumindest mit ihrem den Sitzventilkörper (47) belastenden Arm (46) im wesentlichen radial zur Längsachse des Filters (10, 50, 60) angeordnet ist.

10. Flüssigkeitsfilter nach einem der Ansprüche 1 bis 9, **dadurch gekennzeichnet, daß** das ringförmig angeordnete Filtermaterial ein Sterneinsatz (24) ist, der radial von außen nach innen durchströmt ist.

11. Flüssigkeitsfilter nach einem oder mehreren der Ansprüche 1 bis 10, **dadurch gekennzeichnet, daß** das Filter als Leitungsfilter mit einem becherförmigen Gehäuseteil (14) und einem zugeordneten, dessen offene Seite verschließenden Deckel (15) ausgeführt ist, wobei das becherförmige Gehäuseteil (14) an seinem Boden (17) einen seitlich zur Längsachse versetzt liegenden Rohrstutzen für den Zulaufanschluß (18) und einen im wesentlichen zentrisch liegenden zweiten Rohrstutzen für den Ablaufanschluß (19) aufweist, während am Deckel (15) ein dritter Rohrstutzen für den Tankanschluß (21) angeordnet ist.

12. Flüssigkeitsfilter nach einem der Ansprüche 2 bis 11, **dadurch gekennzeichnet, daß** die ringförmige Wand an der zweiten Endkappe (26) einen zylindrischen Abschnitt (33) bildet, der an seinem Außenumfang einen Dichtring (30) trägt, welcher die Schmutzseite (29) vom Tankanschluß (21) trennt.

13. Flüssigkeitsfilter nach einem der Ansprüche 1 bis 10, **dadurch gekennzeichnet, daß** das Filter als Tankeinbaufilter (50) ausgebildet ist, bei dem das becherförmige Gehäuseteil (14) an seinem Boden (17) den Zulaufanschluß (18) und den Ablaufanschluß (19) aufweist und daß die den Druckregler (11) aufnehmende Endkappe (51) zugleich als ein das becherförmige Gehäuseteil (14) an seinem offenen Ende verschließender Deckel (51) ausgebildet ist.

14. Flüssigkeitsfilter nach Anspruch 13, **dadurch gekennzeichnet, daß** der an der Endkappe (26, 51) sich nach außen erstreckende, zylindrische Abschnitt (33) einen den Druckregler schützenden Raum (34) sowie den Tankanschluß (21) bildet.

15. Flüssigkeitsfilter nach einem oder mehreren der Ansprüche 1 bis 10, **dadurch gekennzeichnet, daß** das Filter (60) als Leitungsfilter mit einem becherförmigen Gehäuseteil (62) und einem zugeordneten, dessen offene Seite verschließenden Deckel (63) ausgeführt ist, wobei das becherförmige Gehäuseteil (62) an seinem Boden (17) einen insbesondere zentral angeordneten Rohrstutzen für den Ablaufanschluß (19) aufweist, während am Deckel (63) ein insbesondere seitlich zur Längsachse versetzt liegender Rohrstutzen für den Zulaufanschluß (18) sowie ein zweiter Rohrstutzen für den Tankanschluß (21) angeordnet sind.

16. Flüssigkeitsfilter nach Anspruch 15, **dadurch gekennzeichnet, daß** im Gehäuse (61) ein Zwischendeckel (65) angeordnet ist, der den mit dem Tankanschluß (21) verbundenen Raum (34) von der mit dem Zulaufanschluß (18) verbundenen Schmutzseite (29) trennt.

17. Flüssigkeitsfilter nach Anspruch 16, **dadurch gekennzeichnet, daß** der Zwischendeckel (65) den Raum (34) abdeckt und einen zentralen, rohrförmigen Hauptstutzen (68) aufweist, mit dem das Filterelement (71) am Deckel (63) gehaltert und abgedichtet ist.

18. Flüssigkeitsfilter nach Anspruch 16 oder 17, **dadurch gekennzeichnet, daß** der Zwischendeckel (65) einen im wesentlichen konzentrisch zum Hauptstutzen (68) angeordneten, ringförmigen Kragen (66) aufweist, der den zylindrischen Abschnitt (33) umgreift und dabei den Raum (34) abdichtet, insbesondere durch einen Dichtring (67).

19. Flüssigkeitsfilter nach einem der Ansprüche 16 bis 18, **dadurch gekennzeichnet, daß** der Zwischendeckel (65) Fixierstege (72, 73) für den Ventilmodul (36) aufweist, die in den Raum (34) hineinragen.

## Claims

1. Liquid filter with built-in pressure regulator (11) for fuel, and with a housing, in which is arranged a radial-throughflow filter element (12) which is inserted between an inflow connection (18) connected to a dirty side and an outflow connection (19) connected to the clean side of the filter (10), the housing having formed on it, in addition to the inflow connection (18) and outflow connection (19), a tank connection (21), via which, during the response of the pressure regulator (11), liquid flowing via the valve of the latter flows out from the clean side to the tank, in which filter element (12) the annularly arranged filter material is arranged, sealed off, between two end caps (25, 26, 51) arranged on the end faces, **characterized in that** the pressure regulator (11) is arranged on one end cap (26, 51) of the filter element (12), and **in that** the pressure regulator (11) has a seat-valve body (47) which is loaded by a leaf spring (45).

2. Liquid filter according to Claim 1, **characterized in that** the end cap (26, 51) receiving the pressure regulator (11) has an annular wall (33) on its side facing away from the filter material (24), and **in that** the space (34) surrounded by the wall receives essentially the pressure regulator (11).

3. Liquid filter according to Claim 1 or 2, **characterized in that** the pressure regulator (11) is designed as a valve module (36) capable of being built into the end cap (26, 51).

4. Liquid filter according to Claim 3, **characterized in that** the pressure regulator (11) has a carrier element (37), in which a bush (39) forming the valve seat (41) is arranged and which forms a holding arm (43) lying at a distance from the valve seat (41), and **in that** an angled leaf spring (45) is mounted on the carrier element (37) such that the said leaf spring with one arm (46) presses the seat-valve body (47) in the direction of the valve seat (41) and with the other arm (48) is supported in the carrier element (37).

5. Liquid filter according to one of Claims 1 to 4, **characterized in that** the seat-valve body (47) is designed spherically and, in particular, is a ball.

6. Liquid filter according to Claim 4 or 5, **characterized in that** the end cap (26, 51) has a tubular nipple (35) which faces the clean side (31) and into which a bush (39) of the pressure regulator (11) can be plugged and is sealed off by means of a sealing ring (42).

7. Liquid filter according to one or more of Claims 1 to 6, **characterized in that** the filter element (12, 71) has, on its other end cap (25) which lies opposite the pressure regulator (11), an outwardly projecting annular tubular nipple (27) for plugging into a receiving nipple (23) fixed with respect to the housing, the tubular nipple (27) serving for holding and sealing off the filter element (12, 71) in the housing (13).

8. Liquid filter according to one of Claims 3 to 7, **characterized in that** the valve module (36) of the pressure regulator (11) is arranged so as to be exchangeable through the space (34) in the end cap (25, 51).

9. Liquid filter according to one of Claims 1 to 8, **characterized in that** the leaf spring (45) is arranged, at least with its arm (46) loading the seat-valve body (47), essentially radially with respect to the longitudinal axis of the filter (10, 50, 60).

10. Liquid filter according to one of Claims 1 to 9, **characterized in that** the annularly arranged filter material is a star insert (24) through which the flow passes radially from the outside inwards.

11. Liquid filter according to one or more of Claims 1 to 10, **characterized in that** the filter is designed as a line filter with a bowl-shaped housing part (14) and with an assigned cover (15) closing the open side of the latter, the bowl-shaped housing part (14) having on its bottom (17) a tubular nipple, offset laterally with respect to the longitudinal axis, for the inflow connection (18) and an essentially centrically lying second tubular nipple for the outflow connection (19), whilst a third tubular nipple for the tank connection (21) is arranged on the cover (15).

12. Liquid filter according to one of Claims 2 to 11, **characterized in that** the annular wall on the second end cap (26) forms a cylindrical portion (33) which carries on its outer circumference a sealing ring (30) which separates the dirty side (29) from the tank connection (21).

13. Liquid filter according to one of Claims 1 to 10, **characterized in that** the filter is designed as a built-in tank filter (50), in which the bowl-shaped housing part (14) has on its bottom (17) the inflow connection (18) and the outflow connection (19), and **in that** the end cap (51) receiving the pressure regulator (11) is designed at the same time as a cover (51) closing the bowl-shaped housing part (14) at the open end of the latter.

14. Liquid filter according to Claim 13, **characterized in that** the cylindrical portion (33) extending outwards on the end cap (26, 51) forms a space (34) protecting the pressure regulator and also forms the tank connection (21).

15. Liquid filter according to one or more of Claims 1 to 10, **characterized in that** the filter (60) is designed as a line filter with a bowl-shaped housing part (62) and with an assigned cover (63) closing the open side of the latter, the bowl-shaped housing part (62) having on its bottom (17) an, in particular, centrally arranged tubular nipple for the outflow connection (19), whilst a tubular nipple, in particular offset laterally with respect to the longitudinal axis, for the inflow connection (18) and a second tubular nipple for the tank connection (21) are arranged on the cover (63).

16. Liquid filter according to Claim 15, **characterized in that** the housing (61) has arranged in it an intermediate cover (65) which separates the space (34) connected to the tank connection (21) from the dirty side (29) connected to the inflow connection (18).

17. Liquid filter according to Claim 16, **characterized in that** the intermediate cover (65) covers the space (34) and has a central tubular main nipple (68), by means of which the filter element (71) is held and sealed off on the cover (63).

18. Liquid filter according to Claim 16 or 17, **characterized in that** the intermediate cover (65) has an annular collar (66) which is arranged essentially concentrically with respect to the main nipple (68) and which surrounds the cylindrical portion (33) and at the same time seals off the space (34), in particular by means of a sealing ring (67).

19. Liquid filter according to one of Claims 16 to 18, **characterized in that** the intermediate cover (65) has for the valve module (36) fixing webs (72, 73) which project into the space (34).

## Revendications

1. Filtre à liquide avec régulateur de pression (11) incorporé pour du carburant et avec un boîtier logeant un élément filtrant (12) traverse radialement, par le carburant et disposé entre un raccord d'entrée (18) relié à un côté pollué et un raccord de sortie (19) relié au côté propre du filtre (10), avec sur le boîtier, outre le raccord d'entrée (18) et le raccord de sortie (19), un raccord de réservoir (21) par lequel le liquide du côté propre s'écoule vers le réservoir lors de la réaction du régulateur de pression (11) par l'intermédiaire de la soupape de celui-ci, et dont le matériau filtrant annulaire de l'élément filtrant (12) est disposé de façon étanche entre deux capuchons d'extrémité (25, 26, 51) frontaux,
**caractérisé en ce que**
le régulateur de pression (11) est disposé sur un capuchon d'extrémité (26, 51) de l'élément filtrant, et le régulateur de pression (11) présente un organe de soupape (47) sollicité par un ressort à lames (45).

2. Filtre à liquide selon la revendication 1,
**caractérisé en ce que**
du côté détourné du matériau filtrant (24), le capuchon d'extrémité (26, 51) logeant le régulateur de pression (11) présente une paroi annulaire (33), et l'espace (34) entouré par la paroi loge essentiellement le régulateur de pression (11).

3. Filtre à liquide selon la revendication 1 ou 2,
**caractérisé en ce que**
le régulateur de pression (11) est réalisé en forme d'un module de soupape (36) pouvant être monté dans le capuchon d'extrémité (26, 51).

4. Filtre à liquide selon la revendication 3,
**caractérisé en ce que**
le régulateur de pression (11) présente un élément de support (37) logeant une douille (39) formant le siège de soupape (41) et l'élément de support forme un bras de support (43) écarté du siège de soupape (41), et sur l'élément de support (37) est logé un ressort à lames (45) coudé dont un bras (46) pousse l'organe de soupape (47) en direction du siège de soupape (41) et dont l'autre bras (48) s'appuie dans l'élément de support (37).

5. Filtre à liquide selon l'une quelconque des revendications 1 à 4,
**caractérisé en ce que**
l'organe de soupape (47) présente une forme sphérique et est en particulier une bille.

6. Filtre à liquide selon la revendication 4 ou 5,
**caractérisé en ce que**
le capuchon d'extrémité (26, 51) présente une tubulure (35) tournée vers le côté propre (31) dans laquelle on peut enfoncer et étancher à l'aide d'un joint d'étanchéité (42) une douille (39) du régulateur de pression (11).

7. Filtre à liquide selon une ou plusieurs des revendications 1 à 6,
**caractérisé en ce qu'**
au niveau de son autre capuchon d'extrémité (25) opposé au régulateur de pression (11), l'élément filtrant (12, 71) présente une tubulure (27) annulaire saillant vers l'extérieur pour être enfoncée dans une tubulure de réception (23) solidaire du boîtier, la tubulure (27) servant à fixer et étancher l'élément filtrant (12, 71) dans le boîtier (13).

8. Filtre à liquide selon l'une quelconque des revendications 3 à 7,
**caractérisé en ce que**
le module de soupape (36) du régulateur de pression (11) peut être changé à travers l'espace (34) dans le capuchon d'extrémité (25, 51).

9. Filtre à liquide selon l'une quelconque des revendications 1 à 8,
**caractérisé en ce que**
le ressort à lames (45), au moins par son bras (46) sollicitant l'organe de soupape (47), est pour l'essentiel radialement à côté de l'axe longitudinal du filtre (10, 50, 60).

10. Filtre à liquide selon l'une quelconque des revendications 1 à 9,
**caractérisé en ce que**
le matériau filtrant disposé de façon annulaire est un insert en forme d'étoile (24) que le liquide traverse radialement de l'extérieur vers l'intérieur.

11. Filtre à liquide selon une ou plusieurs des revendications 1 à 10,
**caractérisé en ce que**
le filtre est réalisé en forme de filtre conducteur avec une partie de boîtier (14) en forme de gobelet et un couvercle (15) associé fermant le côté ouvert de celle-ci, la partie de boîtier en forme de gobelet (14) présentant sur son fond (17) une tubulure décalée latéralement par rapport à l'axe longitudinal pour le raccord d'entrée (18) et une deuxième tubulure située essentiellement au centre pour le raccord de sortie (19), tandis que sur le couvercle (15) est disposée une troisième tubulure pour le raccord de réservoir (21).

12. Filtre à liquide selon l'une quelconque des revendications 2 à 11,
**caractérisé en ce que**
la paroi annulaire forme sur le deuxième capuchon d'extrémité (26) un segment cylindrique (33) qui porte un joint d'étanchéité (30) sur la périphérie extérieure qui sépare le côté pollué (29) du raccord de réservoir (21).

13. Filtre à liquide selon l'une quelconque des revendications 1 à 10,
**caractérisé en ce que**
le filtre est un filtre (50) disposé dans un réservoir, dont la partie de boîtier (14) en forme de gobelet présente dans son fond (17) le raccord d'entrée (18) et le raccord de sortie (19), et le capuchon d'extrémité (51) logeant le régulateur de pression (11) sert en même temps de couvercle (51) fermant la partie de boîtier (14) en forme de gobelet au niveau de son extrémité ouverte.

14. Filtre à liquide selon la revendication 13,
**caractérisé en ce que**
le segment cylindrique (33) s'étendant depuis le capuchon d'extrémité (26, 51) vers l'extérieur forme un espace (34) protégeant le régulateur de pression ainsi que le raccord de réservoir (21).

15. Filtre à liquide selon une ou plusieurs des revendications 1 à 10,
**caractérisé en ce que**
le filtre (60) est réalisé en forme de filtre conducteur avec une partie de boîtier (62) en forme de gobelet et un couvercle (63) associé fermant le côté ouvert de celle-ci, la partie de boîtier (62) en forme de gobelet présentant sur son fond (17) une tubulure disposée en particulier au centre pour le raccord de sortie (19), tandis que sur le couvercle (63) sont disposées une tubulure décalée latéralement par rapport à l'axe longitudinal pour le raccord d'entrée (18) ainsi qu'une deuxième tubulure pour le raccord de réservoir (21).

16. Filtre à liquide selon la revendication 15,
**caractérisé en ce que**
dans le boîtier (61) est disposé un couvercle intermédiaire (65) qui sépare l'espace (34) relié au raccord de réservoir (21) du côté pollué (29) relié au raccord d'entrée (18).

17. Filtre à liquide selon la revendication 16,
**caractérisé en ce que**
le couvercle intermédiaire (65) recouvre l'espace (34) et présente une tubulure principale (68) centrale tubulaire par laquelle l'élément filtrant (71) est fixé au couvercle et étanché.

18. Filtre à liquide selon la revendication 16 ou 17,
**caractérisé en ce que**
le couvercle intermédiaire (65) présente un collet (66) annulaire essentiellement concentrique à la tubulure principale (68), et qui entoure le segment cylindrique (33) tout en étanchant l'espace (34), en particulier au moyen d'un joint d'étanchéité (67).

19. Filtre à liquide selon l'une quelconque des revendications 16 à 18,
**caractérisé en ce que**
le couvercle intermédiaire (65) présente des nervures de fixation (72, 73) pour le module de soupape (36) qui font saillie dans l'espace (34).
